(19) Europäisches Patentamt

European Patent Office

Office européen des brevets

(11) **EP 1 120 555 B1**

(12) **EUROPEAN PATENT SPECIFICATION**

(45) Date of publication and mention
of the grant of the patent:
**07.05.2003 Bulletin 2003/19**

(51) Int Cl.7: **F02B 27/00**, F02B 29/04,
F02B 33/44

(21) Application number: **01200246.5**

(22) Date of filing: **24.01.2001**

(54) **A process and an air intake system in a combustion engine**

Ein Verfahren und ein Ansaugluftsystem in einer Brennkraftmaschine

Procédé et système d'admission d'air dans un moteur à combustion interne

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **24.01.2000 NO 20000338**

(43) Date of publication of application:
**01.08.2001 Bulletin 2001/31**

(73) Proprietor: **Ulstein Bergen AS
5108 Hordvik (NO)**

(72) Inventors:
• **Skarboe, Leif-Arne
5035 Bergen (NO)**
• **Torsvik, Jone
5251 Soereidgrend (NO)**

(74) Representative: **van Westenbrugge, André et al
Nederlandsch Octrooibureau
P.O. Box 29720
2502 LS The Hague (NL)**

(56) References cited:
DE-A- 3 908 475          GB-A- 2 026 091
US-A- 5 031 598

## Description

The invention is related to a process for reducing pressure swings in an air intake system in a turbocharged combustion engine, in which a turbo-charger, via a charge air cooler, supplies air to an air manifold at which an elongated hollow body, adapted to reduce the pressure swings in the air manifold, is arranged in or at said air manifold.

Such process is disclosed in GB-A-2026091.

In some engine designs the air filling sequence of the cylinders can cause standing pressure waves in the air column of the air manifold, which can result in differences in the air supply from cylinder to cylinder and hence different compression pressure and maximum pressure. This can affect the output of an engine in many ways. The formation of nitrogen oxides ($NO_x$) in a combustion engine increases with increasing combustion temperature. International standards set maximum permissible levels of $NO_x$ in the exhaust gas, consequently the consideration for low $NO_x$ emission is weighed against the consideration for high fuel efficiency. In a diesel engine, uneven cylinder-to-cylinder air supply can cause increased smoke emissions as a consequence of reduced air filling in some of the cylinders.

In a gas engine operating at combustion pressure close to the knocking combustion limit, the maximum operating cylinder pressure will limit the achievable engine power output and variations in the air filling will therefore lead to reduced engine power. The same effect will also cause increased specific fuel consumption. One method to solve the problem is to increase the volume of the air manifold until the amplitude of the pressure swing becomes insignificant. This method results in a series of disadvantages such as; a large and space-demanding air manifold, poor transient response, and an increased energy potential which is discharged in an eventual explosion in the air manifold of gas engines in which fuel gases are mixed with air before the manifold. It is not unknown to arrange a resonator in an air intake system. Both US Patent 4,625,686 and US Patent 4,513,699 discloses different solutions for application of a resonance pipe in an air intake system. The aims of the aforementioned patent documents are different from what is achieved with the present invention and they also describe solutions that cannot overcome the disadvantages mentioned above, in that their designs differ considerably from the present invention. The resonance pipes are open at both ends and the charge air is fed through the pipes, something which leads to a dynamic pressure increase in the air intake system thus increasing engine power. US Patent 4,625,686 discloses an air intake system for a six cylinder engine in which at least one resonance tank is of a length sufficient to cover all inlets of the cylinders, and where the air supply from the turbo-charger is supplied through the resonance pipes through a supply vessel in the form of a cover. One of the objects of the invention is to provide extra boost, i.

e. an increase in the charge air pressure to the cylinders by means of the integrated resonance pipe in the inlet to the air intake. US Patent 4,513,699 disclose a system to reduce the size of the air intake system of a combustion engine, because of the limited space which is available under the hood of a vehicle, in which the cross-section of the resonance pipe decreases in the longitudinal direction, from at least the pipe end which adjoins a resonance chamber, and in which the resonance chamber is arranged to adjoin the cylinders of the engine.

The object of the present invention is to eliminate the disadvantages which are mentioned previously and also to reduce or to counteract undesired pressure swings in the air manifold in a combustion engine, preferably diesel and gas engines, with a construction that is as simple and compact as possible and with the smallest possible change in the volume of the air manifold.

According to the present invention, a starting point is assumed based on that there is a standing pressure wave with a given frequency, which is associated with the operating speed of the engine. The harmonic pressure and mass flow fluctuations have a phase shift of 90 degrees and the pressure fluctuation will peak at the closed end of the air manifold, in which the mass flow can not be anything else but zero. By changing these conditions at the end of the air manifold, the fluctuations will be affected.

The above object is achieved in that the hollow body is adapted to provide air driven in resonance and which sets up a oscillating volume flow large enough to counteract pressure waves in the air manifold.

Preferably, the one end of the hollow body can be closed and the other open end is arranged at the closed end of the air manifold at a distance corresponding to between approximately a half and five times, preferably one time, the effective diameter of the body, and the length of the hollow body can be determined by the pressure wave frequency of the air in the body and the actual speed of sound in the air.

Furthermore, the invention is related to an air intake system in a combustion engine, comprising a turbo-charger and a charge air cooler connected to an air manifold, wherein an elongated hollow body, adapted to reduce pressure waves in the air manifold, is arranged in or adjacent to the air manifold.

According to the invention, the hollow body comprises a first end which is closed in or at said first end and which is fully or partly open at its second end.

Preferred embodiments according to the invention are described in that the elongated hollow body comprises a pipe shaped body or a pipe, where the open end is arranged at the closed end of the air manifold, and that the open end of the hollow body is arranged at a distance from the closed end of the air manifold corresponding to between approximately a half and five times, preferably one time, the effective diameter of the body. The substantially elongated hollow body is arranged longitudinally inside the air manifold, or adjacent to the air manifold or integrated in the air manifold, and that the hollow body comprises an adjustable piston arranged at one end of the body.

The invention shall now be further explained with reference to the enclosed figures.

Figure 1 shows an air intake system comprising an example of a preferred embodiment of the device, according to the present invention, arranged inside an air manifold. Figure 2 shows the device corresponding to Figure 1, according to the invention, arranged adjacent to the manifold.

Figure 3 shows schematically pressure waves at the end of an air manifold, measured during test trials of the present invention.

Turbo-charged medium speed diesel and gas engines normally have the turbocharger(s) mounted at the end of the engine frame. The air from the compressor 10 of the turbocharger is fed through a charge air cooler 11 and into an air manifold 12 which runs along the engine and is connected to the individual intake ports of the cylinders (two of the intake ports are shown by reference number 24), which is well known to one skilled in the art. The air manifold can be formed as an extended body or vessel, flanged onto the engine, often with one per cylinder block in a V-type engine. The air manifold can also be an integrated volume in the engine frame, and for this solution it is normal that the cylinder banks on a V-type engine share a common volume.

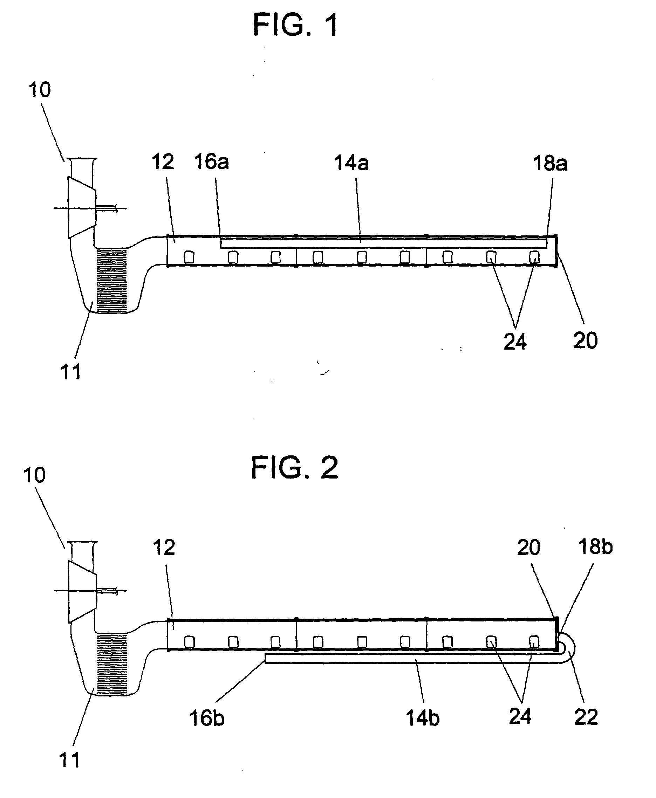

Figure 1 shows a section of an air intake system comprising an air manifold 12 in which an example of a preferred embodiment of the device, according to the present invention, is arranged inside the air manifold 12. To influence the pressure fluctuations in the air manifold 12, a substantially elongated hollow body 14a is arranged in the air manifold, comprising a first end 16a which is closed and a second end 18a which is open and in which the open end 18a is arranged at the closed end 20 of the air manifold.

When a standing pressure wave in the air manifold 12 arises, the hollow body 14a is excited to provide a movement of air, i.e. an oscillating air flow large enough to counteract the pressure waves in the air manifold 12 is set up. This can be a passive system, the resonant frequency of which is adjusted to coincide with the frequency of the unwanted pressure waves. With the present invention, an almost total elimination of the unwanted pressure waves is obtained. A solution such as this is also a very compact construction.

Figure 2 shows a corresponding substantially elongated hollow body 14b arranged on the outside of the air manifold 12. Because of space consideration, the volume of the air manifold 12 can, in some instances, be too small to take an additional hollow body. In this case, the hollow body 14b can be arranged on the outside of the air manifold 12 and comprises, corresponding to the first embodiment, a first closed end 16b and a second open end 18b which is arranged at the closed end of the air manifold 20. The hollow body 14b can be arranged alongside the air manifold 12 and can then, for example, comprise an curved part 22 at the second open end 18b. Other possibilities for placing the hollow body are of course also possible. The arrangement of the hollow body is dependent on the shape of the air manifold and the engine, and of course, also space consideration in the air manifold.

With a closed end it is implied that the hollow body 14a, 14b can be closed at one end by means of a barrier, such as for example, a cover that is mounted in or at the end which is to be closed or by means of, for example, an adjustable piston. Of course, the hollow body can also be made in an otherwise known way with such a barrier integrated in or at the one end. The hollow body can also be an integrated part of the air manifold itself when this is manufactured as, for example, a casting (not shown).

The hollow body (14a, 14b) can be fitted to the air manifold in a known way, such as for example, by welding fastening points onto the body for connection in or to the air manifold by means of screws/bolts, or it can be welded in or to the air manifold, or in another way secured permanently, or in a removable fashion, in or to the air manifold.

In an alternative embodiment, the hollow body can comprise a movable piston arranged inside the hollow body (not shown). This piston can be moved, and be used to fine-tune the resonance frequency of the hollow body. As the pressure amplitude in the hollow body is much larger than the original pressure amplitude in the air manifold, the volume of the hollow body can be much smaller than the volume of the air manifold.

As a consequence of the limiting conditions for the hollow body, the air column will fluctuate with a displacement node at the closed end of the body, and with a pressure node at the open end. The mode shape of the first resonance frequency will have the form of a quarter wave, that is, the wavelength that corresponds to the frequency of the form of the first resonance frequency is four times the length of the hollow body.

Such a body, in which the first resonance frequency of the air-column in the pipe corresponds to the frequency of the unwanted pressure waves in the air manifold, is a very effective resonator when it is arranged with its open end connected to the closed end of the air manifold. The length of the hollow body is determined by the wave frequency and the actual speed of sound of the air, which again is given by the air temperature. The volume decides its "breathing capacity", that is there must be an expedient relationship between length and diameter.

The speed of sound in air in the air manifold is found from the expression:

$$a = \sqrt{\kappa R T}$$

Where the following units are entered:

$a$ speed of sound
$\kappa$ Isentropic constant of air
$R$ gas constant of air
$T$ air temperature

The wavelength is found by the expression: $\lambda=\frac{a}{f}$
The length of the hollow body is then found by: $L=\frac{\lambda}{4}$

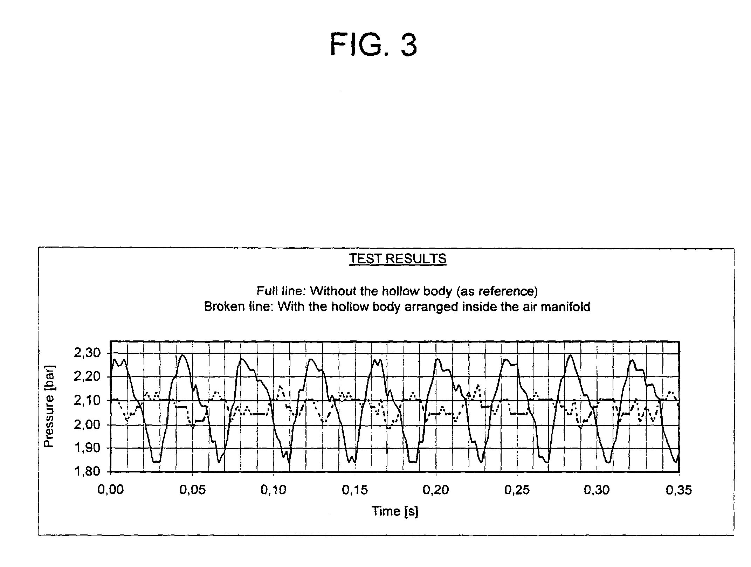

Figure 3 shows schematically pressure swings at the end of an air manifold, in which the two graphs show pressure swings with and without the device respectively according to the present invention. These are measurements, which were taken during actual engine tests of the invention. In this engine test, a cylindrical pipe with a diameter of 100 mm was used. As mentioned, it is the capacity of the body that is decisive for the determination of the dimensions, i.e. the diameter when the length is given, such that another diameter can of course, also be used. This will again be dependent on the volume of the air manifold and amplitude of the pressure swings.

The full line shows the standing pressure waves in the air manifold without the hollow body, measured at 75% load and at the end cover of the air manifold. The pressure fluctuates with double amplitude up towards 0.45 bars. As mentioned previously, this can cause standing pressure waves in the air-column in the air manifold, which in turn, can result in uneven cylinder-to-cylinder air filling and hence uneven compression pressures and maximum cylinder pressures. This will have a negative effect on the output of the engine.

The dotted line shows the pressure swings in the air manifold with the hollow body measured at 85% load and at the end cover of the air manifold. The obvious standing wave form is no longer present, or is distinctly reduced. The pressure fluctuates in this case with significantly reduced double amplitude of 0.15 bars, and the swing phenomenon is dominated by higher order modes and noise. As the numbers show, 0.15 bars in comparison with 0.45 bars, reduces the amplitude with between 60% and 70%.

As figure 3 shows, the present invention provides a particularly suitable process to reduce pressure waves in an air intake system of a combustion engine, and a corresponding device at an air intake system of a combustion engine. The process and device can be used in all combustion engines with an air intake system comprising an air manifold, but is preferably used in diesel and gas engines, and particularly preferred in gas engines with 9 or 18 cylinders. It is also dependent on the number of revolutions and if it is a four or two stroke engine.

A hollow body, such as a pipe-shaped resonator, will in most cases be very simple to fit to an engine, and occupy little space. In those cases in which the length of the pipe does not exceed the length of the air manifold and the cross-section of the air manifold is sufficiently large, the pipe can be arranged inside the air manifold. Here the pipe is arranged such that the open end of the pipe, for example, is arranged at a distance equal to its effective diameter from the end of the air manifold. If this is not possible, the pipe can for example, be arranged on the outside of the engine, with connections to the air manifold at the end of this.

For fitting inside the air manifold, the hollow body can, for example, be made of standard pipes in steel, metal or other materials, and does not need to have a perfectly circular cross-section that is constant along the pipe, but can also include other geometrical cross-sections which are suitable to provide the same characteristics and which can vary along the pipe. The same is the case if the hollow body is arranged on the outside on the engine.

According to the invention it is thus provided a process and a device for a turbo-charged combustion engine that reduces the pressure waves in an air manifold so that the cylinders of the engine have approximately equal air filling.

**Claims**

1. A process for reducing pressure swings in an air intake system in a turbo-charged combustion engine, in which a turbo-charger (10), via a charge air cooler (11), supplies air to an air manifold (12) at which, an elongated hollow body (14a, 14b), adapted to reduce the pressure swings in the air manifold (12), is arranged in or at said air manifold (12), **characterised in that** the hollow body (14a, 14b) is adapted to provide air driven in resonance and which sets up an oscillating volume flow large enough to counteract pressure waves in the air manifold and comprises a first end (16a,16b) which is closed in or at said first end (16a, 16b) and which is fully or partly open at its second end (18a, 18b).

2. A process according to claim 1, **characterised in that** the first end (16a, 16b) of the hollow body (14a, 14b) is being closed and the second open end (18a, 18b) is being arranged adjacent the closed end (20) of the air manifold (12) at a distance equal to between approximately a half and five times the effective diameter of the body.

3. A process according to claim 2, **characterised in that** the second open end (18a, 18b) is being arranged adjacent the closed end (20) of the air manifold (12) at a distance equal to approximately one time the effective diameter of the body.

4. A process according to claim 2, **characterised in that** the length of the hollow body (14a, 14b) is being decided by the resonant frequency of the air in the body and the actual speed of sound in the charge air.

5. An air intake system in a combustion engine, comprising a turbo-charger (10) and a charge air cooler (11) connected to an air manifold (12), wherein an elongated hollow body (14a, 14b), adapted to reduce pressure waves in the air manifold (12), is arranged in or adjacent to the air manifold, **characterized in that** the hollow body (14a, 14b) comprises a first end (16a, 16b) which is closed in or at said first end (16a, 16b) and which is fully or partly open at its second end (18a, 18b).

6. An air intake system according to claim 5, **characterised in that** the elongated hollow body (14a, 14b) comprises a pipe shaped body, in which the open end (18a, 18b) is arranged at the closed end (20) of the air manifold (12).

7. An air intake system according to claim 6, **characterised in that** the open end (18a, 18b) of the hollow body (14a, 14b) is arranged at a distance from the closed end (20) of the air manifold (12) equal to between approximately a half and five times the effective diameter of the body.

8. An air intake system according to claim 7, **characterised in that** the second open end (18a, 18b) is arranged adjacent the closed end (20) of the air manifold (12) at a distance equal to approximately one time the effective diameter of the body.

9. An air intake system according to claim 6 **characterised in that** the hollow body (14a, 14b) is arranged longitudinally inside the air manifold (12).

10. An air intake system according to claim 6, **characterised in that** the hollow body (14a, 14b) is arranged adjacent to the air manifold (12), via a connection such as a curved part (22).

11. An air intake system according to claim 6, **characterised in that** the hollow body (14a, 14b) is arranged integrated in the air manifold (12).

12. An air intake system according to claims 9-11, **characterised in that** the hollow body comprises a displaceable piston arranged at one end of the body (16a, 16b).

**Patentansprüche**

1. Verfahren zur Verringerung von Druckschwingungen in einem Lufteinlasssystem eines Verbrennungsmotors mit einem Turbolader (10), der über einen Ladeluftkühler (11) Luft an einen Einlasskrümmer (12) liefert, in oder an welchem ein langgestreckter Hohlkörper (14a,14b) zur Verringerung der Druckschwingungen im Ansaugkrümmer (12) angeordnet ist, **dadurch gekennzeichnet, dass** der Hohlkörper (14a,14b) in Resonanz gebrachte Luft liefert und einen schwingenden Volumenfluss erzeugt, der groß genug ist, um Druckwellen im Ansaugkrümmer entgegenzuwirken, und ein erstes Ende (16a,16b) aufweist und in oder an diesem ersten Ende (16a,16b) geschlossen ist, dagegen an seinem zweiten Ende (18a,18b) ganz oder teilweise offen ist.

2. Verfahren nach Anspruch 1, **dadurch gekennzeichnet, dass** das erste Ende (16a,16b) des Hohlkörpers (14a,14b) geschlossen ist und sein zweites offenes Ende (18a,18b) neben dem geschlossenen Ende (20) des Einlasskrümmers (12) in einem Abstand angeordnet ist, der in einem Bereich zwischen etwa der Hälfte und dem Fünffachen des effektiven Durchmessers des Hohlkörpers liegt.

3. Verfahren nach Anspruch 2, **dadurch gekennzeichnet, dass** das zweite offene Ende (18a,18b) neben dem geschlossenen Ende (20) des Einlasskrümmers (12) in einem Abstand angeordnet ist, der etwa gleich dem effektiven Durchmesser des Hohlkörpers ist.

4. Verfahren nach Anspruch 2, **dadurch gekennzeichnet, dass** die Länge des Hohlkörpers (14a, 14b) bestimmt wird durch die Resonanzfrequenz der Luft im Hohlkörper und die momentane Schallgeschwindigkeit der Ladungsluft.

5. Lufteinlasssystem eines Verbrennungsmotors mit einem Turbolader (10) und einem Ladeluftkühler (11), der mit einem Lufteinlasskrümmer (12) verbunden ist, wobei ein langgestreckter Hohlkörper (14a,14b) zur Verringerung von Druckwellen im Einlasskrürnmer (12) in oder bei dem Einlasskrümmer angeordnet ist, **dadurch gekennzeichnet, dass** der Hohlkörper (14a,14b) ein erstes Ende (16a,16b) aufweist und in oder an diesem geschlossen ist, während sein zweites Ende (18a,18b) ganz oder teilweise offen ist.

6. Lufteinlasssystem nach Anspruch 5, **dadurch gekennzeichnet, dass** der langgestreckte Hohlkörper (14a,14b) ein rohrförmiger Körper ist, dessen offenes Ende (18a,18b) bei dem geschlossenen Ende (20) des Einlasskrümmers (12) angeordnet ist.

7. Lufteinlasssystem nach Anspruch 6, **dadurch gekennzeichnet, dass** das offene Ende (18a,18b) des Hohlkörpers (14a,14b) in einem im Bereich zwischen etwa der Hälfte und dem Fünffachen des effektiven Durchmessers des Hohlkörpers liegenden Abstand vom geschlossenen Ende (20) des Einlasskrümmers (12) angeordnet ist.

8. Lufteinlasssystem nach Anspruch 7, **dadurch gekennzeichnet, dass** das zweite offene Ende (18a, 18b) bei dem geschlossenen Ende (20) des Einlasskrümmers (12) in einem Abstand angeordnet ist, der etwa gleich dem effektiven Durchmesser des Hohlkörpers ist.

9. Lufteinlasssystem nach Anspruch 6, **dadurch gekennzeichnet, dass** der Hohlkörper (14a,14b) in Längsrichtung innerhalb des Einlasskrümmers (12) angeordnet ist.

10. Lufteinlasssystem nach Anspruch 6, **dadurch gekennzeichnet, dass** der Hohlkörper (14a,14b) neben dem Einlasskrümmer (12) angeordnet und eine Verbindung, wie einen gekrümmten Teil (22), mit ihm hat.

11. Lufteinlasssystem nach Anspruch 6, **dadurah gekennzeichnet,** dass der Hohlkörper (14a,14b) in den Einlasskrümmer (12) integriert ist.

12. Lufteinlasssystem nach den Ansprüche 9 bis 11, **dadurch gekennzeichnet, dass** der Hohlkörper (16a,16b) an seinem einen Ende einen verschiebbaren Kolben aufweist.

## Revendications

1. Procédé pour réduire les oscillations de pression dans un système d'admission d'air d'un mmoteur à combustion turbocompressé, dans lequel un turbocompresseur (10), via un refroidisseur d'air de suralimentation (11), envoie de l'air à un collecteur d'air (12) au niveau duquel un corps creux allongé (14a, 14b), adapté pour réduire les oscillations de pression dans le collecteur d'air (12), est placé dans ou au niveau dudit collecteur d'air (12), **caractérisé en ce que** le corps creux (14a, 14b) est adapté pour fournir de l'air entraîné en résonance et qui établit un débit volumique oscillant suffisamment grand pour contrebalancer les ondes de pression dans le collecteur d'air et comprend une première extrémité (16a, 16b) qui est fermée dans ou au niveau de ladite première extrémité (16a, 16b) et qui est complètement ou partiellement ouvert à sa deuxième extrémité (18a, 18b).

2. Procédé selon la revendication 1, **caractérisé en ce que** la première extrémité (16a, 16b) du corps creux (14a, 14b) est fermée et la deuxième extrémité ouverte (18a, 18b) est adjacente à l'extrémité fermée (20) du collecteur d'air (12) à une distance comprise entre environ la moitié et cinq fois le diamètre effectif du corps.

3. Procédé selon la revendication 2, **caractérisé en ce que** la deuxième extrémité ouverte (18a, 18b) est adjacente à l'extrémité fermée (20) du collecteur d'air (12) à une distance à peu près égale au diamètre effectif du corps.

4. Procédé selon la revendication 2, **caractérisé en ce que** la longueur du corps creux (14a, 14b) est déterminée par la fréquence de résonance de l'air dans le corps et la vitesse réelle du son dans l'air de suralimentation.

5. Système d'admission d'air dans un moteur à combustion, comprenant un turbocompresseur (10) et un refroidisseur d'air de suralimentation (11) connecté à un collecteur d'air (12), dans lequel un corps creux allongé (14a, 14b), adapté pour réduire les ondes de pression dans le collecteur d'air (12), est placé dans ou adjacent au collecteur d'air, **caractérisé en ce que** le corps creux (14a, 14b) comprend une première extrémité (16a, 16b) qui est fermée dans ou au niveau de ladite première extrémité (16a, 16b) et qui est complètement ou partiellement ouvert à sa deuxième extrémité (18a, 18b).

6. Système d'admission d'air selon la revendication 5, **caractérisé en ce que** le corps creux allongé (14a, 14b) comprend un corps en forme de tuyau, dans lequel l'extrémit ouverte (18a, 18b) est placée au niveau de l'extrém fermée (20) du collecteur d'air (12).

7. Système d'admission d'air selon la revendication 6, **caractérisé en ce que** l'extrémité ouverte (18a, 18b) du corps creux (14a, 14b) est placée à une distance de l'extrémit fermée (20) du collecteur d'air (12) comprise entre environ la moitié et cinq fois le diamètre effectif du corps.

8. Système d'admission d'air selon la revendication 7, **caractérisé en ce que** la deuxième extrémité ouverte (18a, 18b) est adjacente à l'extrémité fermée (20) du collecteur d'air (12) à une distance à peu près égale au diamètre effectif du corps.

9. Système d'admission d'air selon la revendication 6, **caractérisé en ce que** le corps creux (14a, 14b) est placé longitudinalement à l'intérieur du collecteur d'air (12).

10. Système d'admission d'air selon la revendication 6, **caractérisé en ce que** le corps creux (14a, 14b) est adjacent au collecteur d'air (12), via une connexion telle qu'une partie couibée (22).

11. Système d'admission d'air selon la revendication 6, **caractérisé en ce que** le corps creux (14a, 14b) est intégré au collecteur d'air (12).

12. Système d'admission d'air selon les revendications 9 à 11, **caractérisé en ce que** le corps creux comprend un piston mobile placé à une extrémité du corps (16a, 16b).

# FIG. 1

# FIG. 2

# FIG. 3

TEST RESULTS

Full line: Without the hollow body (as reference)
Broken line: With the hollow body arranged inside the air manifold